# EUROPEAN PATENT APPLICATION

(11) **EP 2 824 883 A1**
(43) Date of publication of application: **14.01.2015**
(21) Application number: 13290162.0
(22) Date of filing: 12.07.2013
(51) Int. Cl.: H04L 29/06, H04N 21/4728, H04N 21/845, H04N 5/232

(54) **A video client and video server for panoramic video consumption**

(71) Applicant: ALCATEL LUCENT, 92100 Boulogne-Billancourt (FR)
(72) Inventor: De Vleeschauwer, Bart, 2970 Schilde (BE); Rondao Alface, Patrice, 1400 Nivelles (BE); Macq, Jean-François, 1083 Ganshoren (BE); Verzijp, Nico, 2018 Antwerpen (BE)
(74) Representative: Plas, Axel Ivo Michel

(57) **Abstract**

A video client (101) keeps track of the user's region of interest in a panoramic video, generates information defining the user's region of interest, and communicates the information defining the user's region of interest to a server (102) as part of a request for the panoramic video. Upon receipt of the request, the server (102) selects one or more segments of one or more tile of the panoramic video corresponding with the user's region of interest, and delivers the selected segment(s) of the selected tile(s) to the client (101) in response to the request. In the video client (101), a buffer (112) temporarily stores the received segments, and a display (114) requests segments from the buffer (112) to display the user's region of interest in the panoramic video.

## Description

### Field of the Invention

The present invention generally relates to delivery and consumption of panoramic video or omnidirectional video. Therein, a client typically consumes a rectangular subset of the panoramic content, named the viewport. The viewport can move across the panoramic content.

A panoramic or omnidirectional video represents a video item, i.e. files or streams, wherein the field of view is larger than 120 degrees. In addition, the present invention is useful for video delivery beyond High Definition (HD), e.g. 4K ultra high definition (UHD) video at 8.3 megapixels or 8K UHD video at 33.2 megapixels, whatever the field of view is. Typically, portions of such a panoramic video covering only a rectangular part of the entire field of view are encoded separately into so called tiles of the panoramic video. Tiles in other words represent spatial parts of the panoramic video, each covering a rectangular part of the entire surface or field of view of the panoramic video. It is noticed that a tile may also cover the entire field of view. Different tiles may have different sizes, they may be spatially separated or be spatially overlapping. Further, a single tile may be available in different versions, each version representing a different quality or encoding/decoding resolution. A panoramic video is usually not consumed entirely. When watching a panoramic video, the user shall indicate his region of interest, i.e. the portion of the entire field of view that he desires to display. When requesting a panoramic video, the client shall receive video segments, i.e. subsequent temporal portions typically of equal length, e.g. 4 seconds, of one or more tile. The one or more tile cover the user's region of interest such that the client can display the user's region of interest in the panoramic video. A tile covering a larger surface but including a second tile, is a tile at a lower zoom level. A tile at a lower zoom level deliverable with a lower resolution, i.e. a lower pixel density, may for instance be preferred over a tile at a higher zoom level that is only available with higher resolution, i.e. a higher pixel density. A tile covering a part of a a second tile, is called a tile at a higher zoom level.

The present invention in particular concerns delivery and consumption of panoramic video with server side optimizations.

### Background of the Invention

The article "Evaluation of Distribution of Panoramic Video Sequences in the eXplorative Television Project" from the authors P. Quax et al., published in Proceedings of the 22nd ACM Workshop on Network and Operating Systems Support for Digital Audio and Video (NOSSDAV 2012), Toronto, Canada, June 7-8, 2012, proposes extensions to HTTP Adaptive Streaming (HAS) in order to enable delivery of subsets of a larger, panoramic video.

Also the article "Spatial Tiling And Streaming In An Immersive Media Delivery Network" from the authors Omar A. Niamut, M. J. Prins, R. van Brandenburg and A. Havekes, published in EuroITV 2011, Lisbon, 29 June 2011, suggests extensions to HAS to enable delivery of a subset of panoramic video content.

The existing solutions known from Quax et al. and Niamut et al. however rely on client side decisions for tile selection. The client thereto uses the so called manifest file listing information on the available tiles of a panoramic video and on available versions of the tiles. Relying on client side decisions does not allow to take into account information related to the requests made by other clients, as a result of which the tile selection is not optimal for the functioning of the content delivery network as a whole.

It is an objective of the present invention to disclose a video client and video server for panoramic video that resolve the above mentioned drawbacks of the prior art. More precisely, it is an objective of the present invention to disclose a client and server for panoramic video wherein the selection of segments and tiles enables a more coordinated decision across multiple clients in order to optimize the functioning of the content delivery network.

### Summary of the Invention

According to the present invention, the above defined objectives are realized by a video client for panoramic video consumption as defined by claim 1, the video client comprising:
- a downloader able to send a request for a panoramic video to a server and to receive one or more segment of one or more tile of the panoramic video in response to the request;
- a buffer able to temporarily store received segments of the panoramic video;
- an interaction component able to keep track of a user's region of interest in the panoramic video; and
- a display able to request one or more segment from the buffer and to display the user's region of interest in the panoramic video;
wherein:
- the interaction component is adapted to generate information defining the user's region of interest; and
- the downloader is adapted to communicate the information defining the user's region of interest to the server.

Thus, the present invention enables the video client to specify the user's region of interest in its request for a panoramic video, e.g. the coordinates and dimensions of the user's region of interest, without selecting the segments and tiles at the video client. The information defining the user's region of interest in other words does not have to comprise information identifying specific tiles or segments that the client desires to receive. This way, the server is enabled to combine the information specifying the user's region of interest with information on available tiles and eventually also with other information such as available bandwidth to the video client, available bandwidth on links in the content delivery network that are shared with other clients and/or applications, video client device capabilities, user behaviour, fill level of the buffer in the video client, availability of certain tiles in cache servers closer to the video client in the content delivery network, etc., to make a selection of the tile or tiles of the panoramic video segment(s) of which will be delivered to the client in response to the client's request. It is noticed however that the client still may specify in his request which segment and/or tile it desires to receive, but the server could decide to return a segment and/or tile that differs from the requested one. It is noticed that the user's region of interest can be part of a video segment or it can be part of multiple video segments of multiple tiles. "Downloading segments of a tile" in the context of the present invention must be interpreted broadly to cover as well downloading all segments of a particular video file, progressively downloading a number of segments of a particular video file up to the point in time where for instance the user's region of interest changes, or streaming segments of a video file for instant consumption and immediate removal of consumed segments from the buffer. Thanks to the current invention, the video client does not have to interpret manifest files listing the available tiles and and does not have to select segments of tiles corresponding with the user's region of interest. It only has to capture information specifying the user's region of interest and sent this information to the server. Informing the server on the user's region of interest could be done in a variety of ways as will be explained below. Although manifest files specifying tiles and quality versions may still be delivered to the client, the present invention enables to reduce the manifest information to basic information specifying that it is panoramic content regions of which can be requested. This basic information could for instance just specify the size of the panorama in pixels. It is also noticed that in addition to information defining the user's region of interest, the down loader may communicate other information to the server that may be useful in selecting the segments of tiles that will be delivered, like for instance the bit rate that the down loader believes to be appropriate (e.g. based on download times of previous segments and on the current buffer fill level), the timing of segments, the current buffer fill level, etc. The present invention further brings the advantage that server-side selection of the tiles and segments that will be delivered to a video client in the context of a request for panoramic video, can take into account global information like requests made by all clients at a given point in time, in order to make a selection of tiles that allows optimized delivery and functioning of the content delivery network.

In a first embodiment of the video client for panoramic video consumption according to the present invention, defined by claim 2, the information defining the user's region of interest is encoded in an URL that is used to request the panoramic video.

For instance, the video client could inform the server that the user's region of interest corresponds with a rectangular region of 800 pixels by 600 pixels with (300, 500) as top left coordinates in the entire panoramic video. If the user is interested in a segment from starting time = 100 seconds (s) onwards, and the desired quality or bitrate equals 1000 kilobits per second (kbps), the video client's downloader component could send the following URL towards the server:
http://panoramicvideoservice.com/footballmatch1/segment_temporal_100_ quality_1000kbps_xcoordinate_300_ycoordinate_500_xsize_800_ysize_ 600.ts

In a second embodiment of the video client for panoramic video consumption according to the present invention, defined by claim 3, the information defining the user's region of interest is encoded in an URL as a query message.

For instance, in the same situation where the user's region of interest corresponds with a rectangular region of 800 pixels by 600 pixels with (300, 500) as top left coordinates in the entire panoramic video, for a segment from starting time = 100 s onwards, and a desired quality or bitrate of 1000 kbps, the video client's downloader component could send the following request to the server:
http://panoramicvideoservice.com/footballmatch1/segment_temporal_100_ quality_1000kbps.ts? Xcoordinate=300&ycoordinate=500&xsize=800 &ysize=600

In a third embodiment of the video client for panoramic video consumption according to the present invention, defined by claim 4, parameters defining the user's region of interest are encoded in an additional header of the request.

Again considering the situation wherein the user's region of interest corresponds with a rectangular region of 800 pixels by 600 pixels with (300, 500) as top left coordinates in the entire panoramic video, for a segment from starting time = 100 s onwards, and a desired quality or bitrate of 1000 kbps, the video client's downloader component would send the following HTTP GET request with additional header to the server:
GET /footballmatch1/segment_temporal_100_quality_1000kbps.ts HTTP/1.1
Xcoordinate: 300
Ycoordinate: 500
Xsize: 800
Ysize: 600

According to an optional aspect of the video client for panoramic video consumption according to the present invention, defined by claim 5, the one or more segment of one or more tile of the panoramic video are received from a cache node that stores a selection of segments of tiles of the panoramic video in between the server and the video client.

Indeed, the server that delivers the selected segments of the tiles may be a cache server that performs pre-fetching of segments from a source server. The prefetched segments could correspond to specific regions of the panoramic video that are or are predicted to be highly popular.

According to yet another optional aspect of the video client for panoramic video consumption according to the present invention, defined by claim 6, the interaction component is further adapted
- to compare the information defining the user's region of interest with tile coordinates of the one or more tile; and
- to modify autocrop data such that displayed images match with the user's region of interest or to instruct the buffer and/or display to modify autocrop data such that displayed images match with the user's region of interest.

In response to a given request specifying the user's region of interest, the server selects one or more segment of a tile or plural tiles that suit(s) the user's request. To make sure that the video client will display only the desired region of interest and not the complete tile(s) containing it, the interaction component can be modified in order to cope with the general problem that the requested region of interest coordinates do not exactly match with the tile coordinates the server can provide. It is however assumed that the received segments enclose the requested region of interest. If it is further assumed that the server uses the h.264 video codec, the video client's interaction component may be adapted to compare the requested region of interest coordinates with the actual tile coordinates and modify the bitstream's Sequence Parameter Set (SPS) autocrop data prior to decoding such that the decoder only decodes video information in the actual region of interest and the display actually matches the user's region of interest. Alternatively, the video client's interaction component may pass information to the buffer and/or display enabling the buffer and/or display to adapt the autocrop data such that displayed images match with the user's region of interest.

In addition to a video client as defined by claim 1, the present invention relates to a corresponding client-side implemented method for panoramic video consumption as defined by claim 7, the method comprising:
- sending a request for a panoramic video to a server and receiving onr or more segment of one or more tile of the panoramic video in response thereto;
- temporarily storing in a buffer received segments of the panoramic video;
- tracking a user's region of interest in the panoramic video; and
- requesting one or more segment from the buffer and displaying the user's region of interest in the panoramic video;
wherein the method further comprises:
- generating information defining the user's region of interest; and
- communicating the information defining the user's region of interest to the server.

The present invention further also concerns a video server for panoramic video consumption as defined by claim 8. The video server is able to receive, interpret and answer requests from a video client operating in accordance with the present invention, and thereto comprises:
- a decision component able to receive from a client a request for a panoramic video comprising information defining a user's region of interest in the panoramic video, the decision component being adapted to select one or more segment of one or more tile of the panoramic video corresponding with the user's region of interest; and
- a server component able to deliver the one or more segment of the one or more tile of the panoramic video to the client in response to the request.

Thus, the server according to the present invention receives requests for panoramic video that specify the user's region of interest, and delivers an answer in the form of one or more segments of one or more tiles of the panoramic video. The server's decision component thereto interprets the region of interest information contained in the request, combines this information with information on the available tiles for the requested panoramic video, and selects the segment or segments of the tile or tiles that will be delivered to the video client in answer to the request.

In determining the most suitable segment(s) to send back to the video client several parameters can be taken into account by the server's decision component, as defined by claim 9. These parameters can for instance comprise:
- the location of the tile in the panoramic video: depending on how the tiling is done, the request could specify a region of interest that does not lie within a single available tile at the highest zoom level; in such case, the server could decide to deliver plural tiles at the highest zoom level, or the server could decide to deliver a tile at a lower zoom level to make sure that the complete region of interest is delivered to the client application, albeit at a lower resolution;
- the user behavior and action: if for instance a user is changing its viewport, i.e. its region of interest, it may be more efficient to deliver a low zoom level tile than a high zoom level tile because otherwise, the user may be requesting different tiles very soon;
- the client device capabilities: for instance, the supported codecs, display size, supported resolutions, etc.;
- the available bandwidth to the client;
- the fill level of the buffer at the video client, i.e. the amount of data present in the play out buffer at the video client;
- availability of certain tiles at the server: the server can be a proxy server or cache server in between the video client and the source server; in case of congestion between the source server and proxy server, the proxy server could for instance decide to send a tile at a low zoom level that is available in its cache instead of requesting a higher zoom level tile from the source server; and
- popularity data: for instance statistical information on popularity of specific video tiles that is maintained by the server.

It is noticed that certain parameters in the above, non-exhaustive list, can be reported by the client to the server. Examples thereof are the available bandwidth to the client and the buffer fill level at the client. Alternatively, the server could monitor these parameters.

Following an optional aspect of the video server for panoramic video consumption according to the present invention, defined by claim 10, the decision component is adapted to generate metadata, and the server component is adapted to add the metadata to the one or more segment of the one or more tile, the metadata specifying how the one or more segment of the one or more tile have to be processed by the client in order to obtain the user's region of interest.

Thus, advantageously, the selected segment(s) is/are delivered together with metadata that can be used at the video client to determine the processing required to obtain the desired region of interest. Examples of such processing are reframing and rescaling. The metadata bring the additional advantage that the video client doesn't need to be knowledgeable on the spatial position of the delivered tile(s) relative to the full panoramic video.

In a particular embodiment of the video server for panoramic video consumption according to the present invention, defined by claim 11, the metadata comprises coordinates of the one or more tile in the panoramic video.

Thus, the metadata may be the coordinates of the returned tile or tiles relative to the panoramic video. Considering again the situation wherein the user's region of interest corresponds with a rectangular region of 800 pixels by 600 pixels with (300, 500) as top left coordinates in the entire panoramic video, for a segment from starting time = 100 s onwards, and a desired quality or bitrate of 1000 kbps, the video server may return an HTTP response containing a single segment and the following metadata:
200 OK
Xcoordinate: 200
Ycoordinate: 400
Xsize: 1000
Ysize: 800
The returned segment comes from a tile that is larger than the region of interest specified in the request, and the metadata contained in the response enable the client to extract and display only the user's region of interest from the received segment.

Following another optional aspect of the video server for panoramic video consumption according to the present invention, defined by claim 12, the decision component is further adapted to
- compare the information defining the user's region of interest with tile coordinates of the one or more tile; and
- to modify autocrop data, e.g. in Advanced Video Coding (AVC), such that displayed images match with the user's region of interest.

Indeed, in response to a given request specifying a user's region of interest, the server selects one or more segment of a tile or plural tiles that suit the request. To make sure that the video client will decode and display only the desired region of interest and not the complete segment(s) containing it, the server - assuming that H.264 encoding is used for the tiles - preferably modifies the bitstream's Sequence Parameter Set (SPS) autocrop data such that the resulting output actually matches the user's region of interest. An advantage thereof is that the video client doesn't need to have knowledge on the spatial position of the tile(s) within the full panoramic video. An additional advantage lies in the fact that no extra metadata has to be sent along the video data stream.

In accordance with a further optional aspect defined by claim 13, the video server is a cache server that stores a selection of segments of tiles of panoramic video that is determined depending on popularity data defining popularity of panoramic video tiles and/or user behaviour tracking.

Thus, statistical information on the popularity of video segments or video tiles, and information on the behaviour of individual users such as for instance typical zoom levels, may be collected in order to determine which segments of which tiles will be cached in the content delivery network.

In addition to a video server as defined by claim 8, the present invention also relates to a corresponding server-side implemented method for panoramic video consumption as defined by claim 14, the method comprising:
- receiving from a client a request for a panoramic video comprising information defining a user's region of interest in the panoramic video;
- determining one or more segment of one or more tile of the panoramic video corresponding with the user's region of interest; and
- delivering the one or more segment of the one or more tile of the panoramic video to the client in response to the request.

### Brief Description of the Drawings

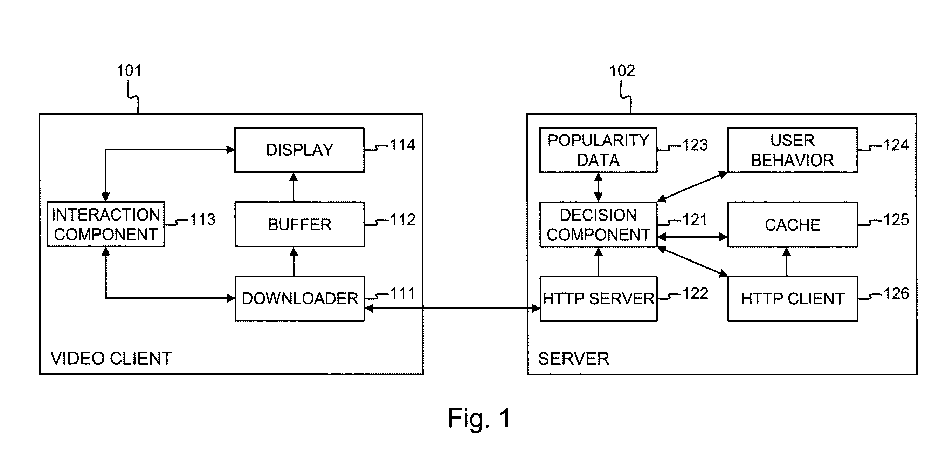

Fig. 1 is a functional block scheme illustrating an embodiment of the video client and server according to the present invention.

### Detailed Description of Embodiment(s)

Fig. 1 shows a system that consists of a video client 101 and a server 102 that enable to consume panoramic video in accordance with the present invention.

The video client 101 comprises a downloader 111, a buffer 112, an interaction component 113 and a display 114. The downloader 111 issues an HTTP request containing parameters that define the user's region of interest in the panoramic video. Several options for encoding parameters in the HTTP requests are discussed further below. The buffer 112 temporarily stores received video segments and consequently contains a number of segments during play out to avoid picture freezing. The interaction component 113 keeps track of the region in the panoramic video images a user is interested in, i.e. the region of interest or ROI. The interaction component 113 makes sure that the downloader 111 communicates the ROI to the server 102. The display 114 requests video segments from the buffer 112 and displays the relevant region of interest to the user. The interaction component 113 instructs the display 114 to show the right ROI.

The server 102 comprises a decision component 121, an HTTP server 122, a popularity data tracker 123, a user behavior tracker 124, cache memory and intelligence 125 and an HTTP client 126. The HTTP server 122 receives HTTP requests from video clients like 101, and delivers a response to such HTTP requests. The response, in the form of segments of a video tile or plural video tiles, will be determined by the decision component 121. The decision component 121 interprets the region of interest information that is embedded in the HTTP request received from a client, interfaces with the other components 123-126 in the system and triggers a specific response to be sent by HTTP server 122 to the video client 101. The cache memory 125 keeps a number of video tiles in case that no intermediate cache servers are used. It is noticed that the cache memory 125 could contain all relevant tiles in the system. The popularity data tracker 123 maintains statistical information on popularity of specific video tiles. Similarly, the user behavior tracker 124 maintains information on the behavior of individual users.

Informing the server 102 on the user's region of interest in the panoramic images can be done by encoding certain parameters in an URL that is used to request the panoramic video. In case the interaction component 113 detects that the user is interested in a region of 800 pixels by 600 pixels with (300, 500) as coordinates of the top left pixel in a panoramic video corresponding to footballmatch1, and the user desires to start watching at a starting point of 100 seconds with a quality/bitrate of 1000 kbps, then the downloader 111 could generate and send the following URL to server 102 in order to receive segments enabling the video client 101 to display the user's region of interest:
http://panoramicvideoservice.com/footballmatch1/segment_temporal_100_ quality_1000kbps_xcoordinate_300_ycoordinate_500_xsize_800_ysize_ 600.ts

Alternatively, the server 102 could be informed on the user's region of interest by including parameters defining the region of interest in an URL that is sent as a query message. If the interaction component 113 again detects that the user is interested in a region of 800 pixels by 600 pixels with (300, 500) as coordinates of the top left pixel in the panoramic video, and the user desires to start the video at a starting point of 100 seconds with a quality/bitrate of 1000 kbps, then the downloader 111 could generate and issue the following request:
http://panoramicvideoservice.com/footballmatch1/segment_temporal_100_ quality_1000kbps.ts? Xcoordinate=300&ycoordinate=500&xsize=800 &ysize=600.

Yet another alternative for informing the server 102 on the user's region of interest consists of encoding the parameters specifying the user's region of interest in an additional request header, e.g. an additional header to an HTTP request. If it is again assumed that the interaction component 113 detects that the user is interested in a region of 800 pixels by 600 pixels with (300, 500) as coordinates of the top left pixel in the panoramic video, and the user desires to start the video at a starting point of 100 seconds with a quality/bitrate of 1000 kbps, then the downloader 111 could generate and issue the following HTTP GET request:
GET /footballmatch1/segment_temporal_100_quality_1000kbps.ts HTTP/1.1
Xcoordinate: 300
Ycoordinate: 500
Xsize: 800
Ysize: 600

In most cases, the requested region of interest by the client 101 is an arbitrary rectangle determined by the viewer using a pointer, remote control or other peripheral device, as a result of which this ROI shall not exactly match with the coordinates or surface of a single tile in the panoramic video that the server 102 can provide. The decision component 121 consequently needs intelligence to cope with this fact and make a selection of the segments of a tile or tiles that will be delivered to the client 101 in order to enable the client 101 to locally generate and display the user's region of interest.

In response to a request for panoramic video from video client 101 specifying the user's region of interest, the decision component 121 may select segment(s) of a single tile that suits the request. The single tile may be a tile at a lower zoom level, eventually even covering the entire panoramic video, that may be delivered at a lower resolution/quality, but which enables the client 101 to generate the user's region of interest through simple processing techniques such as reframing and rescaling on a single tile stream. No additional metadata is required beyond an identifier of the tile stream. It is assumed that the client 101, more particularly the interaction component 113, is knowledgeable on the spatial position of the single tile relative to the full panorama. The interaction component 113 consequently knows what reframing and rescaling are required for segments stored in the buffer 112 before being displayed, and can instruct the display 114 to apply appropriate reframing and rescaling in order to display only the arbitrary region of interest selected by the user.

In an alternative implementation, the decision component 121 in server 102 may select segments(s) of a tile that suits the client's request, and deliver these segment(s) to the downloader 111 along with metadata indicating how the segment(s) must be processed in order to obtain the desired ROI. The metadata in other words specify the reframing and rescaling that must be applied by display 114 in order to generate the user's region of interest from the single tile stream that is delivered in response to the client's request for panoramic video. This alternative implementation has the advantage that the client 101 doesn't need to be knowledgeable on the spatial position of the tile relative to the full panorama. The interaction component 113 shall learn from the received metadata what the relative position is of the received tile stream and derive therefrom what processing (rescaling/reframing) is required, or it shall directly learn from the metadata which reframing and rescaling is necessary in order to generate the user's ROI. The interaction component 113 shall again instruct the display 114 to apply such processing on the received segments before displaying the images.

As mentioned here above, the metadata delivered together with a segment in response to a request for a panoramic video may be the coordinates of the tile of the returned segment relative to the full panorama. In the example where the interaction component 113 detects that the user is interested in a region of 800 pixels by 600 pixels with (300, 500) as coordinates of the top left pixel in the panoramic video, HTTP server 122 could generate an HTTP response containing a single tile stream and metadata that specify the coordinates and sizes of the returned tile as follows:
200 OK
Xcoordinate: 200
Ycoordinate: 400
Xsize: 1000
Ysize: 800
The returned tile is larger than the requested region of interest as a result of which the interaction component 113 and display 114 will have to apply reframing and rescaling in order to be able to display only the user's ROI.

More complex mechanisms may be implemented at server side or client side in order to apply appropriate processing to the received segment/segments to generate and display the user's region of interest. In the following embodiment it is assumed that tiles are encoded according to the H.264 standard specification. In response to request specifying the user's ROI, the decision component 121 selects segments of a tile that suits the request. To make sure that the client decoder will output only the desired ROI and not the full tile containing it, the server 102 now modifies the bitstream's Sequence Parameter Set (SPS) autocrop data such that the resulting output actually matches the requested ROI. This is done as follows:
- Firstly, the SPS NAL unit of the received bitstream is parsed.
- Secondly, the parameter frame_cropping_flag is set equal to 1.
- Thirdly, the fields frame_crop_left_offset, frame_crop_right_offset, frame_crop_top_offset and frame_crop_bottom_offset in the SPS are set to correspond with the ROI coordinates relative to the delivered tile coordinates.
The video client 101 again doesn't need to be knowledgeable on the spatial position of tile within the full panorama. An additional advantage is that no extra metadata must be sent along with the video data stream.

The technique based on modification of SPS autocrop data may also be applied at the client side in yet another alternative implementation. In this case, the interaction component 113 deals with the fact that the ROI coordinates in the request sent by the client 101 do not exactly match with the coordinates of the tile that the server 102 can provide. It is however assumed the received tile coordinates enclose the requested ROI coordinates. It is further assumed that the server 102 uses H.264 encoding. The interaction component 113 compares the ROI coordinates incorporated in the request for panoramic video with the actual tile coordinates and modifies prior to decoding the bitstream's Sequence Parameter Set (SPS) autocrop data such that the display 114 shows images that actually match with the requested ROI. The interaction component 113 thereto executes the following steps:
- Firstly, the SPS NAL unit of the received bitstream is parsed.
- Secondly, the parameter frame_cropping_flag is set equal to 1.
- Thirdly, the fields frame_crop_left_offset, frame_crop_right_offset, frame_crop_top_offset and frame_crop_bottom_offset in the SPS are set to correspond with the ROI coordinates relative to the received tile coordinates.

As will be appreciated by a skilled person, the above described technique based on modifying SPS autocrop data may also be applied in an intermediate network node, e.g. a cache server.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. It is to be understood that the terms so used are interchangeable under appropriate circumstances and embodiments of the invention are capable of operating according to the present invention in other sequences, or in orientations different from the one(s) described or illustrated above.

## Claims

1. A video client (101) for panoramic video consumption, said video client (101) comprising:
- a downloader (111) able to send a request for a panoramic video to a server (102) and to receive one or more segment of one or more tile of said panoramic video in response to said request;
- a buffer (112) able to temporarily store received segments of said panoramic video;
- an interaction component (113) able to keep track of a user's region of interest in said panoramic video; and
- a display (114) able to request one or more segment from said buffer (112) and to display the user's region of interest in said panoramic video;
wherein:
- said interaction component (113) is adapted to generate information defining said user's region of interest; and
- said downloader (111) is adapted to communicate said information defining said user's region of interest to said server (102).

2. A video client (101) for panoramic video consumption according to claim 1, wherein said information defining said user's region of interest is encoded in an URL that is used to request said panoramic video.

3. A video client (101) for panoramic video consumption according to claim 2, wherein said information defining said user's region of interest is encoded in said URL as a query message.

4. A video client (101) for panoramic video consumption according to claim 1, wherein parameters defining said user's region of interest are encoded in an additional header of said request.

5. A video client (101) for panoramic video consumption according to claim 1,
wherein said one or more segment of one or more tile of said panoramic video are received from a cache node that stores a selection of segments of tiles of said panoramic video in between said server (102) and said video client (101).

6. A video client (101) for panoramic video consumption according to claim 1, wherein said interaction component (113) is further adapted
- to compare said information defining said user's region of interest with tile coordinates of said one or more tile; and
- to modify autocrop data such that displayed images match with said user's region of interest or to instruct said buffer (112) and/or said display (114) to modify autocrop data such that displayed images match with said user's region of interest.

7. A client-side implemented method for panoramic video consumption, said method comprising:
- sending a request for a panoramic video to a server (102) and receiving one or more segment of one or more tile of said panoramic video in response thereto;
- temporarily storing in a buffer (112) received segments of said panoramic video;
- tracking a user's region of interest in said panoramic video; and
- requesting one or more segment from said buffer (112) and displaying the user's region of interest in said panoramic video;
wherein said method further comprises:
- generating information defining said user's region of interest; and
- communicating said information defining said user's region of interest to said server (102).

8. A video server (102) for panoramic video consumption, said video server (102) comprising:
- a decision component (121) able to receive from a client (101) a request for a panoramic video comprising information defining a user's region of interest in said panoramic video, said decision component (121) being adapted to select one or more segment of one or more tile of said panoramic video corresponding with said user's region of interest; and
- a server component (122) able to deliver said one or more segment of said one or more tile of said panoramic video to said client (101) in response to said request.

9. A video server (102) for panoramic video consumption according to claim 8, wherein said decision component (121) is adapted to select said one or more segment of said one or more tile of said panoramic video based on at least one of the following parameters:
- relative spatial location of tiles in said panoramic video;
- user behaviour and action;
- client device capabilities;
- available bandwidth to said client;
- buffer fill level at said client
- availability of tiles at said video server (102); and
- popularity data.

10. A video server (102) for panoramic video consumption according to claim 8, wherein said decision component (121) is adapted to generate metadata, and said server component (122) is adapted to add said metadata to said one or more segment of said one or more tile, said metadata specifying how said one or more segment have to be processed by said client (101) in order to obtain said user's region of interest.

11. A video server (102) for panoramic video consumption according to claim 10,
wherein said metadata comprises coordinates of said one or more tile in said panoramic video.

12. A video server (102) for panoramic video consumption according to claim 8, wherein said decision component (121) is further adapted
- to compare said information defining said user's region of interest with tile coordinates of said one or more tile; and
- to modify autocrop data such that displayed images match with said user's region of interest.

13. A video server for panoramic video consumption according to claim 8, wherein said video server is a cache server that stores a selection of segments of tiles of panoramic video that is determined depending on popularity data defining popularity of panoramic video tiles and/or user behaviour tracking.

14. A server-side implemented method for panoramic video consumption, said method comprising:
- receiving from a client (101) a request for a panoramic video comprising information defining a user's region of interest in said panoramic video;
- determining one or more segment of one or more tile of said panoramic video corresponding with said user's region of interest; and
- delivering said one or more segment of said one or more tile of said panoramic video to said client (101) in response to said request.
